# EUROPEAN PATENT APPLICATION

(11) **EP 0 888 929 A2**
(43) Date of publication of application: **07.01.1999**
(21) Application number: 98305245.7
(22) Date of filing: 01.07.1998
(51) Int. Cl.: B60R 1/06

(54) **Vehicle wing mirror unit**

(30) Priority: 03.07.1997 BR 9702561
(71) Applicant: METAGAL INDUSTRIA E COMERCIO LTDA., Estado de Sao Paulo CEP:09990-090 (BR)
(72) Inventor: Otenio, Dejail, Sao Paulo 09861-370 (BR)
(74) Representative: Bankes, Stephen Charles Digby

(57) **Abstract**

A vehicle wing mirror unit comprises a base (4) with bolts (32) for attachment to a vehicle body and a mirror head (1) detachably mounted on the base and comprising a housing (2) in which is mounted a mirror whose position can be adjusted by means of a lever (34). The housing is attached to the base by a fastening (5) comprising one or more pairs of fastening elements (10, 20) integrally formed on respective opposed surfaces (3', 4') of the housing and the base, these fastening elements interengaging by means of a snap-fit so that the housing is normally held in a fixed position relative to the base but can be detached from it, without breakage of the fastening elements, if the mirror head is struck with sufficient force.

## Description

This invention relates to a wing mirror unit for a vehicle, and more particularly to a fastening mechanism for such a unit.

External wing mirrors for motor vehicles typically comprise a base for attachment to a vehicle body and a mirror head detachably mounted on the base and comprising a housing, in which is mounted a generally plate-shaped mirror, means being provided for adjusting the position of the mirror, preferably from inside the vehicle.

Because wing mirrors generally project some 20-30 cm from the side of a vehicle they are vulnerable to impacts, for example from other vehicles. If two cars have to pass each other in a narrow road, their respective wing mirrors will probably be at about the same height and may well strike each other, even if the two vehicles are otherwise clear of each other. Some wing mirror units are designed to bend back in the event of such contact, but if another vehicle passes too close or too fast a wing mirror unit may either be broken or detached from its a mounting in such a way that the fastening mechanism is broken and the whole unit has to be replaced.

A conventional wing mirror head, made of a thermoplastic material, is typically attached to a thermoplastic base by one or more retention pins provided on the side of the mirror head which are received in respective claws on the base secured to the vehicle. A loose auxiliary linkage may be provided to ensure that in the event of an impact detaching the mirror head from its mountings, the head hangs loose from the base rather than being lost.

In a typical conventional construction the claw and retention pin are made of metal, which complicates the manufacture of a unit otherwise made essentially from moulded thermoplastics. The manufacturing process therefore requires closer checking than would otherwise be the case. Examples of units of this type are described in BR-U-6802861-0 and BR-U-7000110-3. The manufacturing process is complicated by the need to produce metal claws and retention pins separately from the housing and base mouldings and to assemble them at a later stage with the help of bolts. The assembly thus involves a substantial number of parts and production steps.

BR-A-9302537 discloses another assembly in which unitary connecting parts are fitted in the housing and base and retained in the assembled position by a metal spring in the shape of an open ring, originally separated from the fittings. This assembly also has the disadvantage of a large number of small parts.

Accordingly, there is a need for a wing mirror assembly of simplified construction which will at the same time comply with the relevant safety legislations.

The present invention consists in a vehicle wing mirror unit comprising a base for attachment to a vehicle body and a mirror head detachably mounted on the base and comprising a housing in which is mounted a mirror, means being provided for adjusting the position of the mirror relative to the base, characterised in that the housing is attached to the base by a fastening comprising at least one pair of fastening elements integrally formed on respective opposed surfaces of the housing and the base, said fastening elements interengaging in such a way that the housing is normally held in a fixed position relative to the base but detachable therefrom, without breakage of the fastening elements, if the mirror head is struck with sufficient force.

The housing and its associated fastening element are preferably formed integrally from a thermoplastic material, as are the base and its associated fastening element or elements. Thus, the need for separate manufacture and assembly of metal connecting parts is avoided.

The unit preferably includes an auxiliary linkage between the base and the mirror head, having a degree of play so that if the mirror head is knocked from its mountings it will hang loose from the base rather than simply falling on the ground and being lost. The linkage may for example be in the form of a spring, chain, rod or flexible wire.

The fastening elements securing the housing to the base are preferably in the form of resilient snap fastening elements, which will hold the mirror housing rigidly relative to the base during normal use but which will be detached in the event of an impact without the fastening elements themselves being broken. The mirror head can then be simply remounted, whereas with conventional assemblies the metal connecting parts are liable to be torn away from the plastics mouldings, necessitating the replacement of all or part of the unit.

The resilient fastenings preferably each comprise a fastening element on one of the base and the mirror housing defining a recess of C-shaped cross-section and a fastening element on the other of the housing and base comprising a matching projection which snaps into the recess.

The fastening preferably comprises two pairs of fastening elements, one element of each pair defining a recess of part cylindrical cross-section and the other comprising a cylindrical pin aligned and dimensioned to snap-fit into its respective cylindrical recess. These components preferably have their cylindrical axes aligned substantially vertically in the working position of the mirror unit, i.e. when it is mounted on the side of a vehicle.

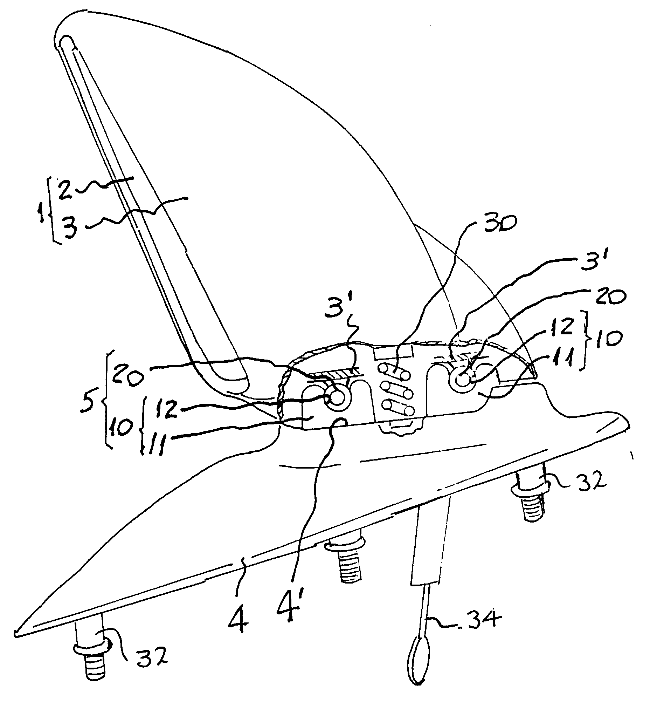

A preferred embodiment of the invention will now be described with reference to the accompanying drawing, which is a schematic partly cut away plan view of a wing mirror unit in accordance with the invention.

The mirror unit shown in the drawing comprises a moulded thermoplastic base 4 having a number of bolts 32 on one side thereof to secure it to the side of a vehicle. On the side opposite the bolts is a substantially flat surface 4' on which are provided a pair of fastening elements 10 integrally moulded with the base. These elements comprise upstanding projections 11, each of which has at its outwardly facing end a part-cylindrical inner surface 12 defining a channel of C-shaped cross-section. Each of these part-cylindrical surfaces extends around an angle of slightly more than 180°, so as to receive with a resilient snap-fit a correspondingly shaped pin 20 integrally moulded on a surface 3' of a moulded thermoplastic housing 3. This housing contains and supports a substantially plate-shaped mirror 2 to form a mirror head 1. The housing 3 is substantially immobilised relative to the base 4 by the two fastenings comprising pins 20 received in channels 12, but the mirror 2 can move relative to the housing and is linked to a lever 34 to enable the orientation of the mirror to be adjusted from within the vehicle.

The surface 3' of the housing 3 which faces the surface 4' of the base extends across substantially the whole of the end of the housing from which project the fastening elements 20. An aperture (not shown) is however provided for the linkage between the mirror 2 and adjusting lever 34.

An auxiliary linkage 30, in the form of a coil spring, is securely anchored at one end to the housing 3 and at the other end to the base 4. This ensures that, in the event of the fastenings 5 becoming disengaged, the head will simply hang loose on the spring 30 rather than falling off the vehicle altogether. This is of particular importance if the wing mirror sustains an impact when the vehicle is moving, since it will be carried along by the vehicle rather than left behind.

Because the projections 11 are of resilient thermoplastic material, encompassing the pins 20 around an angle of somewhat more than 180°, typically about 210°, the mirror head can be fitted to the base 4 with a simple snap fit, not requiring any special tools. The fastenings 5 will normally hold the housing in place, but in the event of an impact one or both of the fastenings can disengage without any of the components actually breaking. If for example the housing sustains an impact at its outer end from the wing mirror of a vehicle travelling in the opposite direction, it will tend to pivot backwards around the rearmost fastening (the left hand one as shown in the drawing) and to disengage the other fastening. The mirror will then swing round towards an orientation parallel to the vehicle, although restrained in this respect by the spring 30. The mirror can then simply be swung back into position and its forwardly-located fastening snapped back together. Similarly, if the mirror is knocked in the opposite direction, for example by encountering a stationary object during reversing, the rearmost fastening will detach itself and the mirror will swing forwards around its foremost fastening, and can be subsequently swung back into position.

In the event of an impact at higher speed, both fastenings may disengage, leaving the mirror housing hanging on the spring 30, but even in that event there is a greatly improved chance that none of the plastics components will have broken and that the mirror can be simply snapped back into position.

The manufacture of the unit in accordance with the invention is greatly simplified in comparison with previously known devices, since the base with the two channelled projections 10 can be moulded as a single unit and the surface 3' of the housing can also be moulded as a single integral unit carrying the two projections 20, either on its own or in conjunction with other parts of the housing.

In the event of an impact, even if the housing itself is damaged, for example by cracking, there is a good chance that the mirror will continue to function normally. The fastening elements 10, 20 are well protected against damage, since any abnormal force or impact on the mirror will tend simply to disengage one or both projecting pins 20 from their respective channels.

## Claims

1. A vehicle wing mirror unit comprising a base (4) for attachment to a vehicle body and a mirror head (1) detachably mounted on the base and comprising a housing (3) in which is mounted a mirror (2), means being provided for adjusting the position of the mirror relative to the base, characterised in that the housing is attached to the base by a fastening (5) comprising at least one pair of fastening elements (10, 20) integrally formed on respective opposed surfaces (3', 4') of the housing and the base, said fastening elements interengaging in such a way that the housing is normally held in a fixed position relative to the base but detachable therefrom, without breakage of the fastening elements, if the mirror head is struck with sufficient force.

2. A wing mirror unit according to claim 1 characterised in that the housing (3) and its associated fastening element or elements (20) are formed integrally from a thermoplastic material.

3. A wing mirror unit according to claim 1 or claim 2 characterised in that the base (4) and its associated fastening element or elements (10) are formed integrally from a thermoplastic material.

4. A wing mirror unit according to any preceding claim characterised in that an auxiliary linkage (30) is provided between the base (4) and the mirror head (1), said linkage having a degree of play whereby if the fastening elements (10, 20) are detached from one another the mirror head will hang loose from the base.

5. A wing mirror unit according to any preceding claim characterised in that the connection between the fastening elements (10, 20) of the or each pair comprises a resilient snap fastening.

6. A wing mirror unit according to claim 5 wherein one fastening element (10) of the or each pair defines a recess (12) of C-shaped cross-section and the other element (20) of the pair comprises a matching projection which snaps into the recess.

7. A wing mirror unit according to claim 6 wherein the fastening (4) comprises two said pairs of fastening elements, one of the elements (10) of each pair defining a respective recess (12) of part cylindrical cross-section, the cylindrical axes of the two recesses being parallel to one another and aligned substantially vertically in the working position of the unit, and the other fastening element (20) of each pair comprising a cylindrical pin aligned and dimensioned to snap-fit into its respective cylindrical recess.
